# EUROPÄISCHE PATENTSCHRIFT

(11) **EP 1 048 228 B1**
(45) Veröffentlichungstag und Bekanntmachung des Hinweises auf die Patenterteilung: **16.06.2004**
(21) Anmeldenummer: 00108863.2
(22) Anmeldetag: 26.04.2000
(51) Int. Cl.: A23L 3/36, A23L 3/375, F25J 5/00

(54) **Vorrichtung and Verfahren zur Temperaturhaltung von Lebensmitteln**
Apparatus and process for low temperature storage of food products
Appareil et procédé de conservation au froid d'aliments

(30) Priorität: 30.04.1999 DE 19919934
(43) Veröffentlichungstag der Anmeldung: 02.11.2000
(73) Patentinhaber: TV Kohlensäure, Technik und Vertrieb GmbH + Co., 67063 Ludwigshafen (DE)
(72) Erfinder: Büst, Wolfgang, 67117 Limburgerhof (DE)
(74) Vertreter: Kasseckert, Rainer

(56) Entgegenhaltungen:
- EP-A- 0 055 683
- DE-A- 3 731 523
- DE-A- 19 743 131
- FR-A- 2 534 130
- US-A- 4 964 283
- US-A- 5 511 379
- US-A- 5 566 553

## Beschreibung

Die Erfindung betrifft eine Vorrichtung und ein Verfahren zur Temperaturhaltung von gekühlten Lebensmitteln.

Die Temperaturhaltung für gekühlte Lebensmittel ist zur Erhaltung der Qualität erforderlich, da in vielen Fällen eine gewünschte Lagertemperatur nicht überschritten werden darf. Das gilt in besonderem Maße auch für Lebensmitteltransporte, wobei für Transporte allgemein wichtige Kriterien wie geringes Transportgewicht und Unabhängigkeit von einer permanenten Energieversorgung hinzukommen. Darüber hinaus sind die Anforderungen an die Flexibilität einer solchen Temperaturhaltung bezüglich des Temperatumiveaus und der Lagerdauer stark angestiegen.

Üblicherweise werden zur Temperaturhaltung mit Trockeneis bestückte Container eingesetzt, die jedoch die Aufgabe der Temperaturhaltung nur in engen zeitlichen Grenzen auf einem festgelegten Temperatumiveau erfüllen können. Eine auf die gewünschte Lagerdauer abgestimmte Dosierung des Trockeneises ist aufgrund seiner Verfügbarkeit in Blöcken schwierig. Darüber hinaus kann es durch Einwirkung der Schmelze auf das Kühlgut zu unerwünschten Beeinträchtigungen der Lebensmittelqualität kommen.

Eine andere Methode zur Temperaturhaltung stellt die Kühlung unter Einsatz von Kohlendioxidschnee dar. Diese Methode wird beispielsweise bei der aus der US 5,511,379 bekannten Kühleinrichtung benutzt. Dabei wird flüssiges Kohlendioxid durch den Einsatz eines Düse-/Prallplattesystems in Kohlendioxidschnee und Kohlendioxidgas umgewandelt. Die Kühlung erfolgt durch den Energiebedarf der stattfindenden Sublimation des Kohlendioxidschnees und durch das dabei entstehende kalte Gas. Das Kühlmittel strömt über das erwähnte Düse-/Prallplattesystem, wobei Kühlmittelschnee und Kühlmittelgas entstehen. Über einen einen Behälter für Kühlmittelschnee und einem Ladungsbehälter für Lebensmittel verbindenden Spalt strömt das entstehende Kühlmittelgas in den Ladungsbehälter und wird von dort durch ein Gebläse abgezogen. Daher ist der Container nicht zum Beladen im Anschluß an den Kühlmitteleintrag, oder auch nur zum nachträglichen Ergänzen der Ladung, oder Entnehmen eines Teils der Ladung geeignet. Bei jedem Öffnen des Ladungsbehälters geht nämlich aufgrund des Spalts Kühlmittelsublimat an die Umgebung verloren, und damit auch Kälteenergie. Die Konzentration an Kühlmittelsublimat in der Umgebungsluft am Arbeitsplatz steigt an, was nicht erwünscht ist und in Abhängigkeit vom eingesetzten Kühlmittel auch zu Gefahren für die dort Beschäftigten führen kann. Darüber hinaus entsteht ein zusätzlicher Energiebedarf zum Betreiben des Gebläses, das das Kühlmittelgas, das sich während des Befüllvorgangs in den Ladungsbehälter ausbreitet, aus dem Ladungsbehälter absaugt. Zusammengefaßt ergibt sich ein hoher Energie- und Kühlmittelbedarf, der sich negativ auf die Wirtschaftlichkeit einer derartigen Einrichtung zur Temperaturhaltung auswirkt.

Der vorliegenden Erfindung liegt die Aufgabe zugrunde, eine Vorrichtung und ein Verfahren zur wirtschaftlichen Temperaturhaltung von gekühlten Lebensmitteln zur Verfügung zu stellen, wobei sowohl die Verluste an Kühlmittel wie auch an Energie minimiert werden.

Diese Aufgabe wird erfindungsgemäß vorrichtungsseitig dadurch gelöst, daß die Vorrichtung ein Doppelkammersystem aufweist, das aus einer Kühlmittelkammer, an weiche eine Kühlmittelzuführung anschließbar ist, und einer Außenkammer besteht, an welche eine Ableitung für Kühlmitteldampf anschließbar ist und welche die Kühlmittelkammer umgibt. Dabei weist die Außenkammer eine Begrenzungsfläche auf, deren Durchlässigkeit für Kühlmittelsublimat veränderlich ist, wobei diese Begrenzungsfläche das Doppelkammersystem von einer Ladungskammer trennt, die die Lebensmittel aufnimmt.

Zwar ist aus dem zitierten Stand der Technik bereits das Prinzip bekannt, Lebensmitteldurch den Energiebedarf der Sublimation von Kohlendioxidschnee und durch das dabei entstehende kalte Gas zu kühlen. Bei der bekannten Kühleinrichtung wird jedoch wichtigen Aspekten nicht genügend Aufmerksamkeit geschenkt, nämlich der Wirtschaftlichkeit der Kalthaltungseinrichtung und der Minimierung von Verlusten sowohl an Kühlmittel, wie auch an Energie. Mit der erfindungsgemäßen Vorrichtung wird gerade diesen wichtigen Aspekten Rechnung getragen. Aufgrund des Doppelkammersystems und der veränderlichen Durchlässigkeit der Begrenzungsfläche der Außenkammer wird eine besonders effiziente Nutzung der Kälteenergie erreicht. Da Kühlmitteldampf unmittelbar aus der Außenkammer abgezogen werden kann und die Durchlässigkeit der Begrenzungsfläche verändert werden kann, wird ein gezielter Einsatz des Kühlmittelsublimats zur Temperaturhaltung der Lebensmittel ermöglicht. Insbesondere können Kälteverluste durch unerwünschtes Austreten von Kühlmitteldampf über die Ladungskammer an die Atmosphäre zuverlässig verhindert werden.

Zur Temperaturhaltung, und insbesondere auch zum Transport, von gekühlten Lebensmitteln bilden das Doppelkammersystem mit der Ladungskammer und mit einer umgebenden Isolationsschicht vorzugsweise zusammen einen Thermocontainer. Dieser Thermocontainer ist sowohl zum Verladen auf größere Transportmittel, als auch zum Transport in kleinen Einheiten, wofür der Container mit Rollen ausgestattet wird, geeignet.

Gemäß einer bevorzugten Ausführungsform der Erfindung ist die Begrenzungsfläche der Außenkammer als Kombination aus mindestens zwei übereinander liegenden gelochten Schichten, von denen mindestens eine in Längsrichtung verschiebbar ist, ausgebildet.

Eine besonders bevorzugte Variante der Vorrichtung ist dadurch gekennzeichnet, daß zwischen den beiden Schichten eine Querdichtung angebracht ist, wodurch ein Austritt von Kühlmitteldampf in die Umgebung verhindert wird. Insbesondere sind die beiden Schichten bevorzugt als Lochbleche ausgeführt.

Eine Weiterbildung der Vorrichtung sieht vor, daß im Anschluß an die Begrenzungsfläche auf der Seite der Ladungskammer Mittel zum Anbringen eines herausnehmbaren Kälteschutzes vorgesehen sind. Der Kälteschutz verhindert dabei ein Absinken der Temperatur innerhalb der Ladungskammer auf Werte unter einer gewünschten Lagertemperatur.

Nach einer weiteren Ausgestaltung der Erfindung besteht die anschließbare Kühlmittelzuführung aus einer Leitung für Flüssiggas, die mit einem Flüssiggasreservoir in Verbindung steht. Damit erfolgt die Kühlmittelzufuhr, auch in größeren Mengen, auf einfache und bedienungsfreundliche Weise.

Gemäß einer bevorzugten Ausführungsform der Erfindung ist in der Kühlmittelkammer ein Düse-/Prallplattesystem angebracht, durch das bei angeschlossener Kühlmittelzuführung das Kühlmittel strömt. Dabei entsteht Kühlmittelschnee und Kühlmitteldampf.

Bevorzugt sind die Flüssiggas führenden Leitungen kontinuierlich sich verjüngend ausgebildet. Durch diese Gestaltung wird der Druckabfall, der aus der auftretenden Reibung der strömenden Flüssigkeit an der Leitungswand resultiert, kompensiert. Das strömende Flüssiggas steht damit immer unter einem konstanten Druck. Unter der Annahme, daß auch die Temperatur konstant gehalten wird, tritt keine Verdampfung der Flüssigkeit in den Leitungen auf. Dies ist für den störungsfreien Betrieb der Einrichtung von Bedeutung, da gasförmige Anteile in den Flüssigkeit führenden Leitungen die Strömung stören und die korrekte Dosierung der Flüssigkeit erheblich erschweren würden.

Gemäß einer besonders bevorzugten Ausführungsform der Erfindung weist die Kühlmittelzuführung mindestens einen Kugelhahn auf, der im gesamten Querschnitt öffnet Durch diese Ausgestaltung wird ebenfalls eine unerwünschte Gasbildung im Flüssigkeit führenden Teil verhindert.

Eine vorteilhafte Variante sieht vor, daß die obere Begrenzung der Kühlmittelkammer ein Gewebe, insbesondere Drahtgewebe, enthält, durch das der Kühlmitteldampf in die Außenkammer des Doppelkammersystems gelangt. Das Gewebe ist nur für Kühlmitteldampf, nicht jedoch für Kühlmittelschnee durchlässig. Der Kühlmittelschnee wird in der Kühlmittelkammer zurückgehalten.

Zweckmäßigerweise besteht die an die Außenkammer anschließbare Ableitung für Kühlmitteldampf aus einer Leitung, insbesondere aus einem elastischen Schlauch, der ein zur Umgebung hin offenes Ende aufweist. Die Ableitung des Kühlmitteldampfes erfolgt vorzugsweise druckgeführt, ohne daß eine Absaugeinrichtung, beispielsweise ein Gebläse, zum Einsatz kommt. Durch die Ableitung des Kühlmitteldampfes unmittelbar aus der Doppelkammer gestalten sich die Druckverhältnisse so, daß fast unmittelbar nach Beginn des Kühlmitteleintrags der entstehende Kühlmitteldampf dem offenen Ende zuströmt. Dies ist ein wesentlicher Vorteil gegenüber dem Stand der Technik. Würde nämlich die Ableitung des Kühlmitteldampfes über die Ladungskammer erfolgen, wie es beispielsweise bei der Kühleinrichtung gemäß der US 5,511,379 der Fall ist, wäre eine Absaugung des Kühlmitteldampfes zum Beispiel mit Hilfe eines Gebläses erforderlich.

Nach einer weiteren Ausgestaltung der Erfindung sind die Kühlmittelzuführung sowie die Kühlmitteldampfableitung in eine Versorgungsstation eingebaut. In diese Versorgungsstation ist ein, insbesondere speicherprogrammierbares, Steuerelement integriert, das nach vorgebbaren Parametern die Kühlmittelzufuhr steuert Als Parameter werden vor allem die gewünschte Lagertemperatur und Kühldauer vorgegeben. Dabei sind die Versorgungsstation und der Thermocontainer vorzugsweise trennbar ausgeführt. Insbesondere besteht die Möglichkeit, den Thermocontainer zu Transportzwecken einzusetzen. Dazu bietet es sich an, den Thermocontainer beispielsweise mit Rädern auszustatten. Darüber hinaus können die Außentemperatur und weitere relevante Parameter, die auf den jeweiligen Einsatz der Vorrichtung abgestimmt sind, bei der Bemessung der erforderlichen Kühlmittelmenge durch das Steuerelement berücksichtigt werden.

Die Erfindung betrifft ferner ein Verfahren zur Temperaturhaltung von gekühlten Lebensmitteln.

Verfahrensseitig wird die gestellte Aufgabe dadurch gelöst, daß ein Kühlmittel in eine Kühlmittelkammer eines Doppelkammersystems eingeleitet wird, wobei das Doppelkammersystem aus einer Kühlmittelkammer und einer Außenkammer besteht. Der entstehende Kühlmitteldampf wird über eine an der Außenkammer angeschlossene Kühlmitteldampfableitung abgeführt. Der entstehende Kühlmittelschnee wird in der Kühlmittelkammer deponiert. Das durch Sublimation aus dem Kühlmittelschnee entstehende Kühlmittelsublimat wird über eine Begrenzungsfläche der Außenkammer abgegeben, wobei die Durchlässigkeit der Begrenzungsfläche für Kühlmittelsublimat so eingestellt wird, daß während des Befüllens der Kühlmittelkammer mit Kühlmittel die Begrenzungsfläche nicht durchlässig ist, sowie nach Beendigung des Befüllens zum Start der Kalthaltungsphase die Begrenzungsschicht für Kühlmittelsublimat durchlässig gemacht wird. Somit wird während des Befüllens kein Kühlmitteldampf in die Ladungskammer eingebracht. Nach Beendigung des Befüllens zum Start der Kalthaltungsphase wird Kühlmittelsublimat aus der Doppelkammer in die Ladungskammer geführt.

Gemäß einer bevorzugten Ausführungsform der Erfindung wird das Kühlmittel über ein Düse-/Prallplattesystem in die Kühlmittelkammer eingeleitet.

Eine Weiterbildung des Erfindungsgedankens sieht vor, daß bei Ausbildung der Begrenzungsschicht aus mindestens zwei übereinander liegenden gelochten Schichten, von denen mindestens eine in Längsrichtung verschiebbar ist, die Durchlässigkeit der Begrenzungsfläche durch gegeneinander Verschieben der Schichten eingestellt wird.

Zweckmäßigerweise wird die Position der verschiebbaren Schicht der Begrenzungsfläche so eingestellt, daß während des Befüllens der Kühlmittelkammer mit Kühlmittel die Löcher nicht deckungsgleich mit den Löchern der fixierten Schicht liegen, und somit kein Kühlmitteldampf in die Ladungskammer eingebracht wird. Nach Beendigung des Befüllens zum Start der Kalthaltung wir die Position der verschiebbaren Schicht so eingestellt, daß die Löcher der verschiebbaren Schicht zur Deckung mit den Löchem der fixierten Schicht der Begrenzungsfläche gebracht werden, so daß Kühlmittelsublimat aus der Doppelkammer in die Ladungskammer geführt wird.

Die Erfindung bietet eine ganze Reihe von Vorteilen:

Im Gegensatz zu herkömmlichen Einrichtungen zur Temperaturhaltung von Lebensmitteln wird mit der Erfindung eine wirtschaftliche und verlustarme Vorrichtung und Methode zur Verfügung gestellt, womit es möglich ist, sowohl die Verluste an Kühlmittel wie auch an Kälteenergie zu minimieren. Die gute Dosierbarkeit des eingesetzten Flüssiggases und der daraus resultierenden Menge an Kühlmittelschnee trägt maßgeblich dazu bei, daß der Kühlmitteleinsatz sinnvoll minimiert werden kann. Vor allem der Einsatz des Schichtsystems zwischen Doppelkammer und Ladungskammer ermöglicht eine effiziente Nutzung der Kälteenergie. Kälteverluste bei allen nach Eintrag des Kühlmittels durchgeführten Eingriffen in die Ladungskammer werden durch die Absperrfunktion der gegeneinander verschiebbaren Schichten vermieden. Die Ladungskammer kann ohne Verluste erst im Anschluß an den Kühlmitteleintrag beladen werden. Auch ein nachträgliches Ergänzen der Ladung, oder das Entnehmen eines Teils der Ladung, ist bei entsprechender Einstellung des Schichtsystems nicht von unerwünschten Energieverlusten begleitet. Außerdem treten beim Öffnen der Ladungskammer, nachdem die Kühlmittelkammer befüllt ist und die verschiebbaren Schichten undurchlässig eingestellt sind, keine erhöhten Konzentrationen an Kühlmittelsublimat oder Kühlmitteldampf, im allgemeinen also an gasförmigem Kohlendioxid, am Arbeitsplatz des Mitarbeiters, der die Thermocontainer belädt, auf. Vorteilhafterweise gestaltet sich die Bedienung und Beladung der Vorrichtung einfach und sicher, so daß kein speziell ausgebildetes Personal erforderlich ist. Darüber hinaus ermöglicht die Versorgungsstation, insbesondere wenn sie Anschlüsse für Kühlmittel und Kühlmitteldampf nach zwei oder mehr Seiten hin aufweist, die gleichzeitige Befüllung von zwei oder mehr Thermocontainern und somit einen effizienten Einsatz der Arbeitskraft.

Die erfindungsgemäße Vorrichtung eignet sich hervorragend zur Transportkühlung. Sie ist unabhängig von einer permanenten Energieversorgung in der Kalthaltungsphase zu betreiben. Darüber hinaus ist der Aufbau der Vorrichtung aus wenigen Komponenten einfach und robust gewählt, was den Anforderungen an einen Transportcontainer im Hinblick auf Transportgewicht und Haltbarkeit sehr entgegenkommt.

Die druckgeführte Ableitung des Kühlmitteldampfes während der Schneebildung trägt ebenfalls zum einfachen Aufbau der Vorrichtung bei, da keine Absaugeinrichtung erforderlich ist. Damit wird nicht zuletzt die Zuverlässigkeit der Vorrichtung erhöht.

Die Durchströmung der Ladungskammer mit kaltem Gas sorgt für eine homogene Temperaturverteilung in der Ladungskammer. Die Lebensmittel werden unabhängig von ihrer Position in der Ladungskammer gleichmäßig kalt gehalten.

Im folgenden soll die Erfindung anhand eines in den Figuren schematisch dargestellten Ausführungsbeispiels näher erläutert werden. Es zeigen:
Figur 1 eine Darstellung der Bestandteile des Doppelkammersystems mit Außenkammer, Innenkammer und verschiebbarer Schicht,
Figur 2 eine Skizze einer Versorgungsstation mit zwei angeschlossenen Thermocontainem.

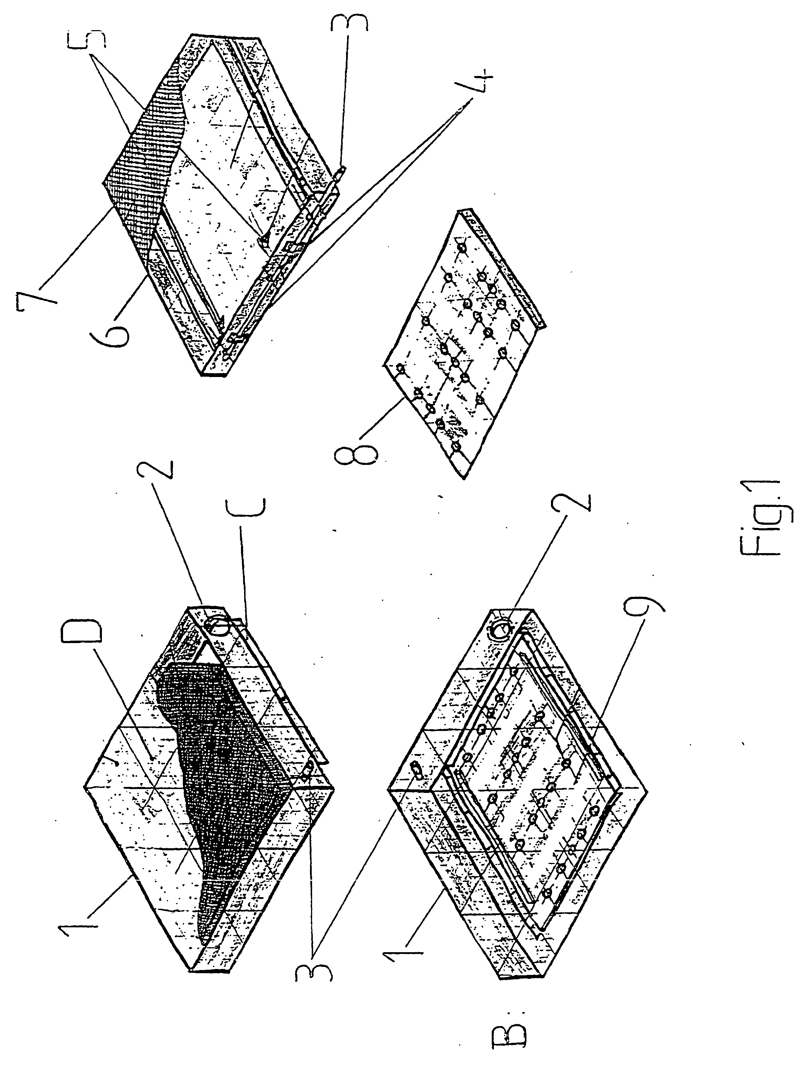

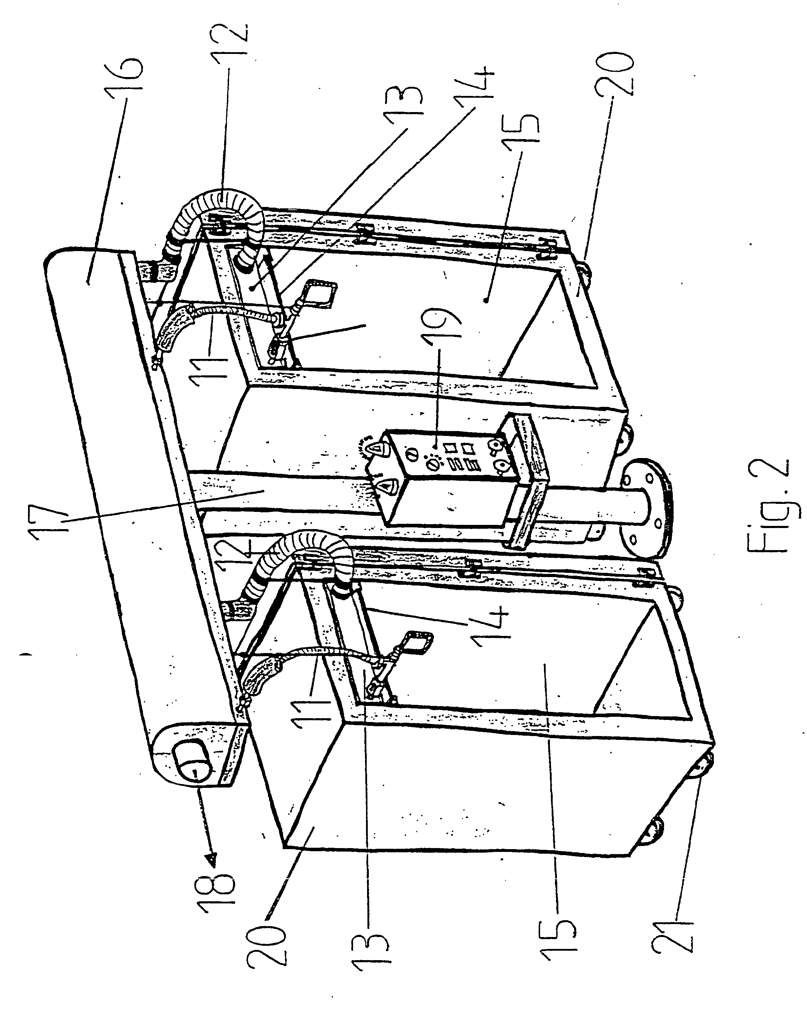

Gemäß Figur 1 ist das Doppelkammersystem aus der Außenkammer 1, der Kühlmittelkammer 7 und der verschiebbaren Schicht aufgebaut, welche als Sperrschieber 8 ausgebildet ist. Die Einbaulage der Kühlmittelkammer 6 befindet sich innerhalb der Außenkammer 1 und wird durch D markiert. Der Sperrschieber 8 befindet sich in eingeschobener Stellung am Ort C. Der Sperrschieber 8 weist in diesem Beispiel 20 Löcher mit einem Durchmesser von je 20 mm auf. Die Außenkammer 1 hat ein Volumen von 27 Litern, die Kühlmittelkammer 6 von 19 Litern. Der Kühlmitteleintrag erfolgt über das Düsenrohr 3, das die Düsen 4 aufweist. Das eingedüste Kühlmittel prallt auf die Prallplatten 5, wobei Kühlmittelschnee und Kühlmitteldampf entstehen. In diesem Ausführungsbeispiel wird als Kühlmittel Kohlendioxid eingesetzt. Das entstehende gasförmige Kohlendioxid strömt durch das Gewebe 7 aus der Kühlmittelkammer 6 in die Außenkammer 1 und von dort über den Anschluß 2 zur Kühlmittelgasableitung. Die Unterseite der Außenkammer 1 ist in der Ansicht B dargestellt. Die Unterseite besteht aus einem Lochboden 9, der die gleiche Anordnung und Abmessungen der Löcher aufweist wie der Sperrschieber 8. Die Löcher können somit durch Verschieben des Sperrschiebers 8 wahlweise zur Deckung gebracht werden oder nicht deckungsgleich positioniert werden. Diese Sperrschicht ermöglicht somit eine.Verbindung oder Trennung der Doppelkammer und einer Ladungskammer, wie sie in Figur 2 unter anderem gezeigt wird. '

Figur 2 zeigt eine Versorgungsstation mit zwei über Kühlmittelzuleitungen 11 und Kühlmitteldampfableitungen 12 verbundenen Thermocontainem 20. Die Thermocontainer 20 weisen je eine Doppelkammer 13, wie in Figur 1 gezeigt, mit Sperrschieber 14 und Ladungskammer 15 auf. Die Ladungskammer 15 steht zur Einlagerung der zu kühlenden Lebensmittel zur Verfügung. In einem Versorgungsmodul 16 werden die Zu- und Ableitungen für Kühlmittel gebündelt und mit Vorratsbehältern durch Armaturen verbunden. Die Gasableitung 18 führt den bei der Befüllung der Kühlmittelkammer 6 entstehenden Kühlmitteldampf in die Umgebung außerhalb des Gebäudes, in dem die Versorgungsstation eingesetzt wird, ab. Das Versorgungsmodul 16 ruht auf einem Sockel 17, an dem ein Steuerelement 19 befestigt ist, das den Kühlmitteleintrag steuert. Die Thermocontainer 20 sind auf Rädern 21 montiert und können von den Kühlmittelzuleitungen 11 und den Kühlmitteldampfableitungen 12 abgekoppelt werden. Somit sind die Thermocontainer 20 für Transportzwecke einsetzbar.

## Patentansprüche

1. Vorrichtung zur Temperaturhaltung von gekühlten Lebensmitteln, **gekennzeichnet durch** ein Doppelkammersystem (13), das aus einer Kühlmittelkammer (6), an welche eine Kühlmittelzuführung (11) anschließbar ist, und einer Außenkammer (1) besteht, an welche eine Ableitung (12) für Kühlmitteldampf anschließbar ist und weiche die Kühlmittelkammer (6) umgibt, wobei die Außenkammer (1) eine Begrenzungsfläche aufweist, deren Durchlässigkeit für Kühlmittelsublimat veränderlich ist, wobei diese Begrenzungsfläche das Doppelkammersystem (13) von einer Ladungskammer (15) trennt, die die Lebensmittel aufnimmt.

2. Vorrichtung nach Anspruch 1, **dadurch gekennzeichnet, daß** das Doppelkammersystem (13) mit der Ladungskammer (15) und mit einer umgebenden Isolationsschicht zusammen einen Thermocontainer (20) bilden.

3. Vorrichtung nach Anspruch 1 oder 2, **dadurch gekennzeichnet, daß** die Begrenzungsfläche als Kombination aus mindestens zwei übereinander liegenden gelochten Schichten aufgebaut ist, von denen mindestens eine in Längsrichtung verschiebbar ist.

4. Vorrichtung nach Anspruch 3, **dadurch gekennzeichnet, daß** zwischen den mindestens zwei gelochten Schichten, insbesondere Lochblechen, eine Querdichtung angebracht ist, wodurch ein Austritt von Kühlmitteldampf in die Umgebung verhindert wird.

5. Vorrichtung nach einem der Ansprüche 1 bis 4, **dadurch gekennzeichnet, daß** im Anschluß an die Begrenzungsfläche auf der Seite der Ladungskammer Mittel zum Anbringen eines herausnehmbaren Kälteschutzes, der ein Absinken der Temperatur innerhalb der Ladungskammer (15) auf Werte unter einer gewünschten Lagertemperatur verhindert, vorgesehen sind.

6. Vorrichtung nach einem der Ansprüche 1 bis 5, **dadurch gekennzeichnet, daß** die anschließbare Kühlmittelzuführung (11) aus einer Leitung für Flüssiggas besteht, die mit einem Flüssiggasreservoir in Verbindung steht.

7. Vorrichtung nach einem der Ansprüche 1 bis 6, **dadurch gekennzeichnet, daß** in der Kühlmittelkammer (6) ein Düse-/Prallplattesystem angebracht ist, durch das bei angeschlossener Kühlmittelzuführung (11) das Kühlmittel strömt, wobei Kühlmittelschnee und Kühlmitteldampf entsteht.

8. Vorrichtung nach Anspruch 6 oder 7, **dadurch gekennzeichnet, daß** die Leitung (11) für Flüssiggas kontinuierlich sich verjüngend ausgebildet ist.

9. Vorrichtung nach einem der Ansprüche 1 bis 8, **dadurch gekennzeichnet, daß** die Kühlmittelzuführung (11) mindestens einen Kugelhahn aufweist, der im gesamten Querschnitt öffnet.

10. Vorrichtung nach einem der Ansprüche 1 bis 9, **dadurch gekennzeichnet, daß** die obere Begrenzung der Kühlmittelkammer (6) ein Gewebe (7), insbesondere Drahtgewebe, enthält, durch das der Kühlmitteldampf in die Außenkammer (1) des Doppelkammersystems (13) gelangt.

11. Vorrichtung nach einem der Ansprüche 1 bis 10, **dadurch gekennzeichnet, daß** die an die Außenkammer (1) anschließbare Ableitung (12) für Kühlmitteldampf aus einer Leitung, insbesondere aus einem elastischen Schlauch, besteht, der ein zur Umgebung hin offenes Ende aufweist.

12. Vorrichtung nach einem der Ansprüche 1 bis 11, **dadurch gekennzeichnet, daß** die Kühlmittelzuführung (11) sowie die Kühlmitteldampfableitung (12) in eine Versorgungsstation eingebaut sind, in die ein, insbesondere speicherprogrammierbares, Steuerelement (19) integriert ist, das nach vorgebbaren Parametern, insbesonderenach gewünschter Lagertemperatur und Kühldauer, die Kühlmittelzuführung steuert, wobei die Versorgungsstation und der Thermocontainer (20) trennbar ausgeführt sind, und insbesondere der Thermocontainer (20) zu Transportzwecken einsetzbar ist.

13. Verfahren zur Temperaturhaltung von gekühlten Lebensmitteln, **dadurch gekennzeichnet, daß** ein Kühlmittel in eine Kühlmittelkammer (6) eines aus einer Kühlmittelkammer (6) und einer Außenkammer (1) bestehenden Doppelkammersystems (13) eingeleitet wird, wobei entstehender Kühlmitteldampf über eine an die Außenkammer angeschlossene Kühlmitteldampfableitung (12) abgeführt wird, sowie entstehender Kühlmittelschnee in der Kühlmittelkammer (6) deponiert wird, dessen Kühlmittelsublimat über eine Begrenzungsfläche der Außenkammer (1) abgegeben wird, wobei'die Durchlässigkeit der Begrenzungsfläche für Kühlmittelsublimat so eingestellt wird, daß während des Befüllens der Kühlmittelkammer (6) mit Kühlmittel die Begrenzungsfläche nicht durchlässig ist, und somit kein Kühlmitteldampf in die Ladungskammer (15) eingebracht wird, sowie nach Beendigung des Befüllens zum Start der Kalthaltungsphase die Begrenzungsschicht für Kühlmittelsublimat durchlässig gemacht wird, so daß Kühlmittelsublimat aus der Doppelkammer (13) in die Ladungskammer (15) geführt wird.

14. Verfahren nach Anspruch 13, **dadurch gekennzeichnet, daß** das Kühlmittel über ein Düse-/Prallplattesystem in die Kühlmittelkammer (6) eingeleitet wird.

15. Verfahren nach Anspruch 13 oder 14, **dadurch gekennzeichnet, daß** bei Ausbildung der Begrenzungsfläche aus mindestens zwei übereinander liegenden gelochten Schichten (8, 9), von denen mindestens eine in Längsrichtung verschiebbar ist, die Durchlässigkeit der Begrenzungsfläche durch gegeneinander Verschieben der Schichten (8, 9) eingestellt wird.

16. Verfahren nach Anspruch 15, **dadurch gekennzeichnet, daß** die Position der verschiebbaren Schicht (8) der Begrenzungsfläche so eingestellt wird, daß während des Befüllens der Kühlmittelkammer (6) mit Kühlmittel die Löcher nicht deckungsgleich mit den Löchern der fixierten Schicht (9) liegen, und somit kein Kühlmitteldampf in die Ladungskammer (15) eingebracht wird, sowie nach Beendigung des Befüllens zum Start der Kalthaltung die Löcher der verschiebbaren Schicht (8) zur Deckung mit den Löchern der fixierten Schicht (9) der Begrenzungsfläche gebracht werden, so daß Kühlmittelsublimat aus der Doppelkammer (13) in die Ladungskammer (15) geführt wird.

## Claims

1. Apparatus for holding the temperature of cooled food products, **characterized by** a double chamber system (13), which comprises a refrigerant chamber (6), to which a refrigerant feed (11) can be connected, and an outer chamber (1), to which a discharge line (12) for refrigerant vapour can be connected and which surrounds the refrigerant chamber (6), the outer chamber (1) having a delimiting surface whose permeability to refrigerant sublimate is variable, this delimiting surface separating the double chamber system (13) from a loading chamber (15) which accommodates the food products.

2. Apparatus according to Claim 1, **characterized in that** the double chamber system (13) together with the loading chamber (15) and a surrounding insulation layer forms a refrigerated container (20).

3. Apparatus according to Claim 1 or 2, **characterized in that** the boundary surface is constructed as a combination of at least two perforated layers which lie on top of one another and at least one of which can be displaced in the longitudinal direction.

4. Apparatus according to Claim 3, **characterized in that** a transverse seal is arranged between the at least two perforated layers, in particular perforated plates, preventing refrigerant vapour from escaping into the environment.

5. Apparatus according to any of Claims 1 to 4, **characterized in that** means for fitting a removable refrigeration protection, which prevents the temperature inside the loading chamber (15) from dropping to values below a desired storage temperature, are provided adjacent to the delimiting surface on the side of the loading chamber.

6. Apparatus according to any of Claims 1 to 5, **characterized in that** the connectable refrigerant feed (11) comprises a line for liquefied gas which is in communication with a liquefied gas reservoir.

7. Apparatus according to any of Claims 1 to 6, **characterized in that** a nozzle/baffle plate system, through which the refrigerant flows when the refrigerant feed (11) is connected, so as to form refrigerant snow and refrigerant vapour, is arranged in the refrigerant chamber (6).

8. Apparatus according to Claim 6 or 7, **characterized in that** the line (11) for liquefied gas is designed so as to taper continuously.

9. Apparatus according to any of Claims 1 to 8, **characterized in that** the refrigerant feed (11) has at least one ball cock which opens over the entire cross section.

10. Apparatus according to any of Claims 1 to 9, **characterized in that** the upper boundary of the refrigerant chamber (6) includes a woven fabric (7), in particular a woven wire fabric, through which the refrigerant vapour passes into the outer chamber (1) of the double chamber system (13).

11. Apparatus according to any of Claims 1 to 10, **characterized in that** the discharge line (12) for refrigerant vapour which can be connected to the outer chamber (1) comprises a line, in particular an elastic hose, which has an end which is open towards the environment.

12. Apparatus according to any of Claims 1 to 11, **characterized in that** the refrigerant feed (11) and the refrigerant vapour discharge line (12) are installed in a supply station in which a control element (19), in particular a control element with a programmable memory, is integrated, this control element using predeterminable parameters, in particular the desired storage temperature and cooling time, to control the refrigerant feed, the supply station and the refrigerated container (20) being designed so that they can be separated, and in particular it being possible for the refrigerated container (20) to be used for transport purposes.

13. Process for holding the temperature of cooled food products, **characterized in that** a refrigerant is introduced into a refrigerant chamber (6) of a double chamber system (13) comprising a refrigerant chamber (6) and an outer chamber (1), refrigerant vapour which is formed being discharged via a refrigerant vapour discharge line (12) connected to the outer chamber, and refrigerant snow which is formed being deposited in the refrigerant chamber (6), the refrigerant sublimate of which is removed via a delimiting surface of the outer chamber (1), the permeability of the delimiting surface to refrigerant sublimate being set in such a way that the delimiting surface is not permeable while the refrigerant chamber (6) is being filled with refrigerant, and therefore no refrigerant vapour is introduced into the loading chamber (15), and after the filling operation has ended, at the start of the phase of maintaining refrigeration, the delimiting layer is made permeable to refrigerant sublimate, so that refrigerant sublimate is guided out of the double chamber (13) into the loading chamber (15).

14. Process according to Claim 13, **characterized in that** the refrigerant is introduced into the cooling chamber (6) via a nozzle/baffle plate system.

15. Process according to Claim 13 or 14, **characterized in that**, if the delimiting surface is formed from at least two perforated layers (8, 9) which are positioned above one another and at least one of which is displaceable in the longitudinal direction, the permeability of the delimiting surface is adjusted by displacing the layers (8, 9) with respect to one another.

16. Process according to Claim 15, **characterized in that** the position of the displaceable layer (8) of the delimiting surface is adjusted in such a way that while the refrigerant chamber (6) is being filled with refrigerant the holes are not congruent with the holes of the fixed layer (9), and therefore no refrigerant vapour is introduced into the loading chamber (15), and after the filling operation has ended, at the start of the refrigeration-holding phase, the holes in the displaceable layer (8) are brought into line with the holes in the fixed layer (9) of the delimiting surface, so that refrigerant sublimate is guided out of the double chamber (13) into the loading chamber (15).

## Revendications

1. Dispositif pour le maintien en température de produits alimentaires réfrigérés, **caractérisé par** un système à double compartiment (13) constitué d'un compartiment à réfrigérant (6) auquel peut être raccordée une conduite d'alimentation en réfrigérant (11) et d'un compartiment externe (1) auquel peut être raccordée une conduite d'évacuation (12) de la vapeur de réfrigérant et qui entoure le compartiment à réfrigérant (6), le compartiment externe (1) présentant une surface de délimitation, dont la perméabilité au sublimé de réfrigérant est variable, cette surface de délimitation séparant le système à double compartiment (13) d'un compartiment de chargement (15), qui réceptionne les produits alimentaires.

2. Dispositif selon la revendication 1, **caractérisé en ce qu'**en association avec le compartiment de chargement (15) et avec une couche isolante périphérique, le système à double compartiment (13) forme un conteneur thermique (20).

3. Dispositif selon l'une quelconque des revendications 1 ou 2, **caractérisé en ce que** la surface de délimitation est constituée sous forme d'une combinaison d'au moins deux couches perforées superposées, dont au moins une est mobile en direction longitudinale.

4. Dispositif selon la revendication 3, **caractérisé en ce qu'**un joint transversal destiné à éviter que la vapeur de réfrigérant ne s'échappe dans l'environnement est monté entre les couches perforées, notamment des tôles perforées, qui sont au moins au nombre de deux.

5. Dispositif selon l'une quelconque des revendications 1 à 4, **caractérisé en ce que** des moyens prévus pour recevoir une protection anti-froid amovible qui évite une baisse de température à des valeurs inférieures à une température de stockage souhaitée sont prévus à l'intérieur du compartiment de chargement (15), dans la continuité de la surface de délimitation, sur le côté du compartiment de chargement.

6. Dispositif selon l'une quelconque des revendications 1 à 5, **caractérisé en ce que** la conduite d'alimentation en réfrigérant (11) raccordable est constituée d'une conduite pour gaz liquide, laquelle est reliée avec un réservoir à gaz liquide.

7. Dispositif selon l'une quelconque des revendications 1 à 6, **caractérisé en ce qu'**un système de buse/de chicane, à travers lequel le réfrigérant s'écoule, lorsque la conduite d'alimentation en réfrigérant (11) est branchée est monté dans le compartiment à réfrigérant (6), de la neige de réfrigérant et de la vapeur de réfrigérant étant générées.

8. Dispositif selon l'une quelconque des revendications 6 ou 7, **caractérisé en ce que** la conduite (11) pour gaz liquide est conçue avec un rétrécissement continu.

9. Dispositif selon l'une quelconque des revendications 1 à 8, **caractérisé en ce que** la conduite d'alimentation en réfrigérant (11) est munie d'au moins un robinet à boisseau sphérique, qui s'ouvre sur toute sa section transversale.

10. Dispositif selon l'une quelconque des revendications 1 à 9, **caractérisé en ce que** la délimitation supérieure du compartiment à réfrigérant (6) contient un tissu (7), notamment un tissu métallique, à travers lequel la vapeur de réfrigérant passe dans le compartiment externe (1) du système à double compartiment (13).

11. Dispositif selon l'une quelconque des revendications 1 à 10, **caractérisé en ce que** la conduite d'évacuation (12) de la vapeur de réfrigérant qui est raccordable sur le compartiment externe (1) est constituée d'une conduite, notamment d'un flexible élastique, présentant une extrémité qui s'ouvre sur l'environnement.

12. Dispositif selon l'une quelconque des revendications 1 à 11, **caractérisé en ce que** la conduite d'alimentation en réfrigérant (11), ainsi que la conduite d'évacuation de la vapeur de réfrigérant (12) sont implantées dans un poste d'alimentation, dans lequel est intégré un élément de pilotage (19) notamment à programme enregistrable, qui pilote l'alimentation en réfrigérant, en fonction de paramètres prédéfinissables, notamment en fonction de la température de stockage et la durée de réfrigération souhaitées, le poste d'alimentation et le conteneur thermique (20) étant conçus de façon séparable et notamment le conteneur thermique (20) pouvant être utilisé à des fins de transport.

13. Procédé pour le maintien en température de produits alimentaires réfrigérés, **caractérisé en ce qu'**un réfrigérant est introduit dans un compartiment à réfrigérant (6) d'un système à double compartiment (13), constitué d'un compartiment à réfrigérant (6) et d'un compartiment externe (1), la vapeur de réfrigérant produite étant évacuée par l'intermédiaire d'une conduite d'évacuation (12) de vapeur de réfrigérant, raccordée sur le compartiment externe et la neige de réfrigérant produite étant déposée dans le compartiment à réfrigérant (6) dont le sublimé de réfrigérant est restitué par l'intermédiaire d'une surface de délimitation du compartiment externe (1), la perméabilité de la surface de délimitation pour le sublimé de réfrigérant étant néglée de sorte qu'en cours de remplissage du compartiment à réfrigérant (6) en réfrigérant, la surface de délimitation n'est pas perméable et de ce fait, aucune vapeur de réfrigérant ne s'introduit dans le compartiment de chargement (15) et à l'issue du remplissage, au démarrage de la phase de maintien du froid, la couche de délimitation pour le sublimé de réfrigérant est rendue perméable, pour que du sublimé de réfrigérant soit conduit du compartiment double (13) dans le compartiment de chargement (15).

14. Procédé selon la revendication 13, **caractérisé en ce que** le réfrigérant est introduit dans le compartiment à réfrigérant (6), par l'intermédiaire d'un système de buse/de chicane.

15. Procédé selon l'une quelconque des revendications 13 ou 14, **caractérisé en ce que** lors de la conception de la surface de délimitation constituée d'au moins deux couches perforées superposées (8, 9), dont au moins une est mobile en direction longitudinale, la perméabilité de la surface de délimitation est réglée par un déplacement des couches (8, 9) l'une contre l'autre.

16. Procédé selon la revendication 15, **caractérisé en ce que** la position de la couche mobile (8) de la surface de délimitation est réglée de façon à ce que pendant le remplissage du compartiment à réfrigérant (6) avec du réfrigérant, les perforations ne communiquent pas avec les perforations de la couche fixée (9), pour qu'aucune vapeur de réfrigérant ne s'introduise dans le compartiment de chargement (15) et à l'issue du remplissage, au démarrage du maintien du froid, les perforations de la couche mobile (8) sont mises en correspondance avec les perforations de la couche fixée (9) de la surface de délimitation, pour que du sublimé de réfrigérant soit conduit du compartiment double (13) dans le compartiment de chargement (15).
